Europäisches Patentamt

European Patent Office

Office européen des brevets

(19)

(11) **EP 0 966 110 A2**

(12) **EUROPEAN PATENT APPLICATION**

(43) Date of publication:
22.12.1999 Bulletin 1999/51

(51) Int. Cl.$^6$: **H04B 1/707**

(21) Application number: 99111037.0

(22) Date of filing: 14.06.1999

(84) Designated Contracting States:
AT BE CH CY DE DK ES FI FR GB GR IE IT LI LU
MC NL PT SE
Designated Extension States:
AL LT LV MK RO SI

(30) Priority: 15.06.1998 JP 16696798

(71) Applicant: NEC CORPORATION
Tokyo (JP)

(72) Inventor:
Omura, Hideo,
NEC Corporation
Minato-ku, Tokyo (JP)

(74) Representative:
VOSSIUS & PARTNER
Siebertstrasse 4
81675 München (DE)

(54) **Finger receiver unit capable of tracking a quick variation of a delay profile**

(57) In a finger receiver unit included in a rake receiver circuit used in a code division multiplex access (CDMA) system, a plurality of despreader circuits are arranged to despread a reception signal by a spread code delayed into a plurality of delayed despread signals. Each of the despreaders has an internal delay time which is different from each other and which is shorter than a chip rate. A selector circuit selects one of the delayed despread signals that has the best quality among the delayed despread signals to send the same to a synthesizer. The finger circuit unit can quickly track a variation of a delay profile in a communication path without including no DLL in the finger receiver unit and can execute synchronization tracking operation.

## FIG. 3

**Description**

This invention relates to a rake receiver for use in a direct sequence code division multiplex access (DS-CDMA) system and, in particular, to a finger receiver unit which is included in the rake receiver. In addition, this invention also relates to a portable receiver or a base station which uses the rake receiver mentioned above.

It is a recent trend that a DS-CDMA system of the type described has drawn a considerable attention and has been expected as one of mobile communication system in the next generation. In such a DS-CDMA system, transmission is made from a transmitter to a receiver after user information data is spread in spectrum by the use of spread codes which are peculiar to the respective users and which are different from one another. With this structure, a plurality of users can carry out simultaneous transmission by the use of the same frequency band.

In the mobile communication of the DS-CDMA system, multi-path fading should be considered which results from desired waves arriving through different paths. On occurrence of such multi-path fading, each of the desired waves is received at a different time instant with strength corresponding to each time instant and is detected as a multi-path component.

Under the circumstances, a rake receiver is used to demodulate such multi-path components resulting from the multi-path fading and to synthesize the demodulated components into a demodulated signal. Herein, it should be considered that the multi-path components are drastically varied with time. However, it is very difficult to completely trace or follow such a variation of the multi-path components with the above-mentioned rake receiver because delay profiles should be determined by calculating correlation between the multi-path components.

It is an object of this invention to provide a finger receiver unit which is included in a rake receiver and which can effectively remove multi-path fading.

It is another object of this invention to provide a rake receiver which includes the finger receiver unit of the type described.

It is yet another object of this invention to provide a base station or a portable station which includes the rake receiver mentioned above.

A finger receiver unit to which this invention is applicable is for use in a code division multiplex access (CDMA) system to produce a despread signal in response to a spread code and a reception signal which is subjected to CDMA modulation. According to an aspect of this invention, the finger receiver unit comprises a plurality of despreader circuits each of which has a delay time different from each other and which are given the reception signal and the spread code in common to produce a plurality of time-delayed despread signals in dependency upon the delay times of the despreader circuits and a selector circuit which selects, as the despread signal, one of the time-delayed despread signals that has the best quality among the time-delayed despread signals.

According to another aspect of this invention, a rake receiver circuit is for use in a code division multiplex access (CDMA) system to produce a demodulated signal in response to a spread code and a reception signal which is subjected to CDMA modulation and which is given to the rake receiver circuit through a plurality of paths. The rake receiver circuit comprises a search finger circuit which receives the reception signal to detect a delay profile of the reception signal having a plurality of path components dependent on the paths, a delay time detection circuit which detects each component delay time of the plurality of the path components by detecting each peak timing of the delay profile, a spread code generator which generates a predetermined spread code, a plurality of delay circuit elements which have primary delay times different from each other and which delay the predetermined spread code by the primary delay times to produce a plurality of delayed spread codes, a plurality of finger receiver units which are given the delayed spread codes and the reception signal to demodulate the path components in accordance with the delayed spread codes into demodulated path components, respectively, and a rake synthesizer which is supplied with the demodulated path components to synthesize the demodulated path components into the demodulated signal. In this event, each of the finger receiver units comprises a plurality of despreader circuits each of which has an internal delay time different from each other and which are given the reception signal and the spread code in common to produce a plurality of delayed despread signals in dependency upon the delay times of the despreader circuits and a selector circuit which selects, as each of the demodulated path components, one of the delayed despread signals that has the best quality among the delayed despread signals.

Brief Description of the Drawing:

Fig. 1 is a block diagram of a conventional rake receiver;
Fig. 2 is a graphical representation for use in describing multi-path fading included in a reception signal;
Fig. 3 is a block diagram of a rake receiver according to a preferred embodiment of this invention; and
Fig. 4 is a block diagram of a finger receiver unit used in the rake receiver illustrated in Fig. 3.

Description of the Preferred Embodiments:

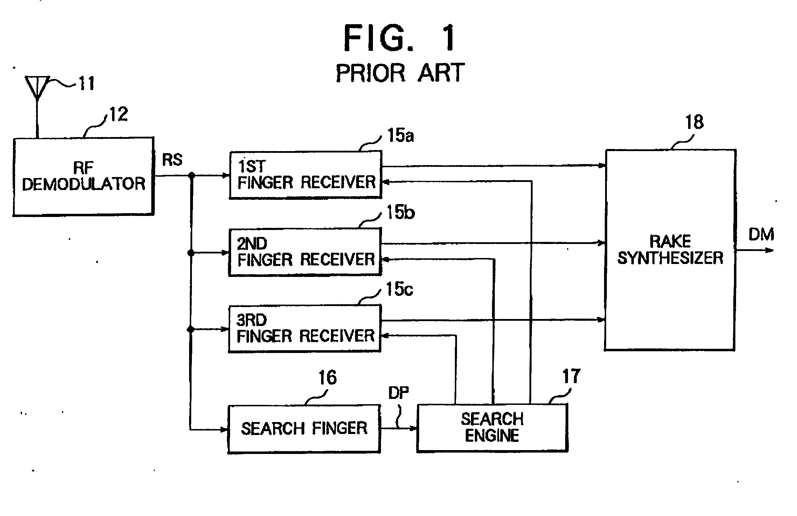

Referring to Fig. 1, description will be made about a conventional rake receiver circuit so as to facilitate an understanding of this invention. At first, the illustrated rake receiver circuit is used for a DS-CDMA system and is operable in response to a radio reception signal to produce a demodulated signal. In this event, the radio reception signal is usually subjected to multipath fading.

In the illustrated example, the radio reception signal is received through an antenna 11 to a radio frequency (RF) demodulator 12 and is demodulated into a demodulated reception signal which will simply be called a reception signal RS hereinafter. The reception signal RS is delivered to first, second, and third finger receiver units 15a, 15b, and 15c and a search finger 16 in parallel. In this event, the search finger 16 is given the reception signal RS to determine whether or not a user's signal is included in the reception signal RS and to produce a delay profile signal DP when the user's signal is included.

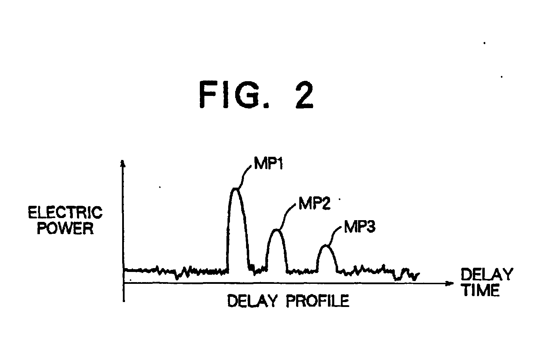

Referring to Fig. 2, the delay profile signal DP detected by the search finger 16 includes multi-path components depicted by first, second, and third multi-path components MP1, MP2, and MP3. In the illustrated example, the first multi-path component MP1 exhibits maximum electric power while the second multi-path component MP2 exhibits electric power which is lower than the first multi-path component and which is higher than the third multi-path component MP3.

As shown in Fig. 1, the delay profile signal DP is sent from the search finger 16 to a search engine 17 which detects each delay time of the first through the third multi-path components MP1 to MP3. The search engine 17 delivers, to the first through the third finger receiver units 15a to 15c, first through third delay signals representative of the delay times of the first through the third multi-path components MP1 to MP3, respectively.

Supplied with the first through the third delay signals, the first through the third finger receiver units 15a to 15c control or adjust phases of spread codes used for despreading the reception signal RS and despread the first through the third multi-path components MP1 to MP3 by the use of the spread codes into desired demodulated waves. The desired demodulated waves are synthesized by a rake synthesizer 18 into a demodulated signal by adjusting the desired demodulated waves in time and by synthesizing them at a maximum ratio.

Herein, it is to be noted that the delay profile DP which is sent from the search finger 16 can be obtained by carrying out correlation calculations in a known manner. This means that the search finger 16 can not always completely follow or trace each multi-path component which varies every moment because it takes a comparatively long time to carry out the correlation calculations.

As mentioned above, the search engine 17 detects each delay time of the multi-path components to adjust the phases of the spread codes of the finger receiver units 15a to 15c and to establish synchronization. Establishment of the synchronization is divided into two steps one of which may be called a synchronization acquisition step and the other of which may be called a synchronization tracking step. The synchronization acquisition step is carried out to search for a synchronization point of the spread code out of the synchronization while the synchronization tracking step is carried out after the synchronization acquisition step to keep a phase error of each spread code within a time which is very shorter than a single chip length of each spread code.

In the illustrated example, it may be considered that the synchronization acquisition step is conducted by the search engine 17 while the synchronization tracking step is conducted by each of the first through the third finger receiver units 15a to 15c.

This shows that each finger receiver unit 15a to 15c must carry out the synchronization tracking step. To this end, a delay locked loop (DLL) is usually used in each finger receiver unit 15a to 15c and has a cross-correlation network, a feedback shift register, a loop filter, and a voltage-controlled clock. With this structure, cross-correlation is calculated between an early code and a late code both of which are earlier and later than a prompt code by a time determined by a chip length of each spread code. In addition, a phase is finely adjusted in the DLL so that a difference becomes zero between correlation electric power calculated in connection with the early code and that calculated in connection with the late code.

In the conventional rake receiver, the search finger must have a circuit for the synchronization acquisition step and each of the finger receiver units 15a to 15c must have the DLL which is complex in structure. This structure has disadvantages as mentioned in the preamble of the instant specification.

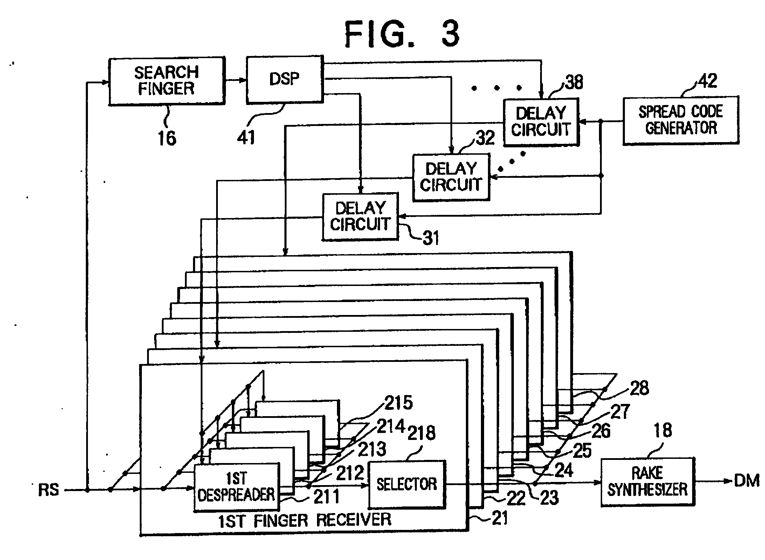

Referring to Fig. 3, a rake receiver circuit according to a preferred embodiment of this invention is assumed to be used in a mobile station and has a search finger 16 supplied with the reception signal RS and a rake synthesizer 18 for producing a demodulated signal DM, like in Fig. 1. The illustrated rake receiver circuit further has first through eighth finger receiver units 21 to 28 connected to first through eighth delay circuits 31 to 38, respectively, which are all connected to a digital signal processor (DSP) 41 and a spread code generator 42.

The DSP 41 is controlled by the search finger 16 and is operable in a manner similar to the search engine 17 shown in Fig. 1. In this connection, the DSP 41 detects each peak timing of the multi-path components, such as MP1 to MP3 illustrated in Fig. 2, to obtain each delay time of the multi-path components. The DSP 41 produces delay time signals representative of the delay times of the multi-path components, on the basis of the delay profile and delivers the delay time signals to the first through the eighth delay circuits 31 to 38, respectively, to which the spread code is given.

In the illustrated example, the spread code generator 42 is assumed to generate a spread code which is composed of a long code, such as a pseudo-random noise (PN) code, and a short code, such as a Walsh code and which is kept unchanged in the illustrated rake receiver circuit, although not explicitly shown in Fig. 3. At any rate, it is well known in the art that the long code is used to establish synchronization while the short code is used to determine each channel for each user.

Thus, the spread code mentioned above is sent to the first through the eighth delay circuits 31 to 38 and given to the first through the eighth finger receiver units 21 to 28, respectively, in accordance with the delay time signals supplied from the DSP 41.

In the example being illustrated, each of the first through the eighth finger receiver units 21 to 28 is similar in structure and operation to one another except that each finger receiver unit 21 to 28 is operable in response to the spread codes which are delayed or shifted by the delay times different from one another and which are determined by the delay time signals sent from the first through the eighth delay circuits 31 to 38. Therefore, description will be made only about the first finger receiver unit 21 as a representative of the first through the eighth finger receiver units 21 to 28.

As shown in Fig. 3, the illustrated finger receiver unit 21 is given the spread code delayed by the first delay circuit 3 by the time determined by a specific one of the delay time signals and has first through fifth despreaders 211 to 215 which are operable in response to internal delayed spread codes which are delayed within the single chip length or time CT in a manner to be described later in detail.

In this event, it is assumed that the first through the fifth despreaders 211 to 215 have first through fifth internal delay units which provide delays -2T, -T, 0, T, and 2T, respectively, where T is equal to one quarter (1/T) time of the single chip time CT. Accordingly, the internal delay times of the first through the fifth internal delay units are equal to -1/2, -1/4, 0, 1/4, and 1/2 of the single chip time CT. However, the number of the despreaders 211 to 215 may not be restricted to five but may be smaller or greater than five. This means that T also may not be restricted to one quarter time of the single chip time CT.

At any rate, the first through the fifth despreaders 211 to 215 despread the reception signal RS in accordance with the internal delayed spread codes into first through fifth local despread signals, respectively. Practically, each internal delayed spread code may include the long and the short codes.

The illustrated finger receiver unit 21 has a selector 218 which is connected to the first through the fifth despreaders 211 to 215 and which is given the first through the fifth local despread signals. The selector 218 compares qualities of the first through the fifth local despread signals with one another to select a best quality of the first through the fifth local despread signals. In order to select the best quality of the despread signal from the first through the fifth local despread signals, the selector 218, a signal to interference ratio (SIR) is used as an evaluation reference of the reception quality to evaluate the first through the fifth local despread signals. Alternatively, any other evaluation reference may be used instead of the SIR.

In Fig. 3, the rake synthesizer 18 is connected to the first through the eighth finger receiver units 21 to 28 and adjusts the delay times sent from the respective finger receiver units 21 to 28 to synthesize them in consideration of the maximum ratio and to produce the demodulated signal DM.

Now, description will be made about operation of the rake receiver circuit illustrated in Fig. 3. The reception signal RS is delivered not only to the first through the eighth finger receiver units 21 to 28 but also to the search finger 16. Herein, it is to be noted that the reception signal RS includes a sequence of pilot symbols which is spread in spectrum and to which an error or noise is added. The pilot symbol sequence may be referred to as a reception pilot symbol sequence. Under the circumstances, an instantaneous delay profile is obtained by calculating a replica of spread pilot symbols which may be simply called a pilot symbol replica and by calculating a cross-correlation between the reception pilot symbol sequence and the pilot symbol replica over a whole length of the pilot symbol replica. More specifically, let N be representative of a search range determined by a distance between a base station and the illustrated rake receiver circuit while L is representative of the replica length. In addition, it is assumed that $r_n$ represents an n-th one of the reception pilot symbols while $p_i$ represents an i-th one of the replica symbols where n is an integer between 0 and N and i is an integer between 0 and L-1.

Under the circumstances, the delay profile Rn of an n-th one of time instants is represented by:

$$Rn = In^2 + Qn^2,$$

where In and Qn are indicative of inphase and quadrature components of the delay profile Rn, respectively. Herein, the relationship between the inphase and the quadrature components In and Qn is given by:

$$In + jQn = \sum_{i=0}^{L-1} (r_{n+i} + conj(p_i)), \qquad (1)$$

where conj is representative of a complex conjugate. From Equation (1), it is readily understood that the delay profile Rn calculated by the search finger 16 is specified by a sum of differences between the reception pilot symbols and the pilot symbol replica over the replica length.

In any event, the delay profile Rn is similar to that illustrated in Fig. 2 and is delivered from the search finger 16 to the DSP 41 which is illustrated in Fig. 3 and which is operable as the search engine, as mentioned before. As a result, each of the first through the eighth delay circuits 31 to 38 is given each delay time determined for the multi-path components, such as MP1 to MP3, from the DSP 41 and delays the spread code by each delay time. Thus, the first through the eighth finger receiver units 21 to 28 (Fig. 3) are given the delayed spread codes delayed by the first through the eighth delay circuits 31 to 38, respectively. It is to be noted that the delay profile Rn is calculated at every one of the reception pilot symbol, as readily understood from Equation (1), and that each symbol rate of the reception pilot symbol is usually lower than a chip rate of the spread codes. This shows that the DSP 41 can not control the delay times within a time shorter than the symbol rate.

Taking the above into consideration, each of the first through the eighth finger receiver units 21 to 28 has the first through the fifth despreaders 211 to 215, as shown in Fig. 3.

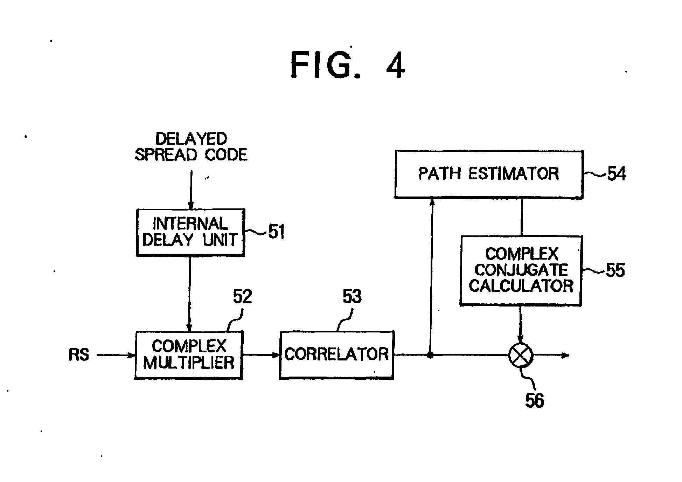

Referring to Fig. 4 together with Fig. 3, each of the first through the fifth despreaders 211 to 215 has an internal delay unit 51, a complex multiplier 52, a correlator 53, a path estimator 54, a complex conjugate calculator 55, and a multiplier 56.

Herein, it is to be noted that each internal delay unit 51 of the first through the fifth despreaders 211 to 215 has the internal delay time which is different from one another and which is shorter than the chip time or rate, as mentioned in conjunction with Fig. 3. This means that each internal delay time is shorter than the symbol rate.

In the illustrated example, the first through the fifth despreaders 211 to 215 (Fig. 3) have the internal delay units 51 which provide the delays of 0, tc/4, tc/2, 3tc/4, and tc, respectively, where tc is representative of the chip time. In this case, the internal delay unit 51 of the third despreader 213 which is placed at the center of the first through the fifth despreaders 211 to 215 provides the delay indicated by the DSP 41. In other words, the delay times of the first through the eighth delay circuits 31 to 38 are varied under control of the DSP 41 to adjust the phases of the spread codes sent through the respective delay circuits 31 to 38.

In Fig. 4, the delayed spread code is given from the spread code generator 42 through the delay circuit 31 to the internal delay unit 51 of each of the first through the fifth despreaders 211 to 215 in the first finger receiver unit 21. Similar operation is carried out in each of the remaining finger receiver units 22 to 28, although description will be omitted from this specification.

The delayed spread code is further delayed by the internal delay unit 51 in each of the first through the fifth despreaders 211 to 215 by the delay time determined in the above-mentioned manner and is sent, as the internal delayed signa, to the complex multiplier 52 which is supplied with the reception signal RS. The complex multiplier 52 despreads the reception signal RS by the delayed spread code delayed through the internal delay unit 51 into the internal despread codes. Each internal despread code is sent to the correlator 53 to calculate a correlation value at every one of the symbols in connection with each internal despread code. The correlation value is delivered to the path estimator 54 on one hand and to the multiplier 56 on the other hand. The path estimator 54 may be formed by a DSP operable in accordance with software and estimates fading vectors by the use of a certain portion of a specific pattern signal. The fading vectors are represented by complex numbers and specify characteristics of a communication path. The fading vectors are given to the complex conjugate calculator 55 to calculate complex conjugates of the fading vectors. The multiplier 56 multiplies an output of the correlator 53 by an output of the complex conjugate calculator 55 to obtain a coherent detection signal. The complex multiplier 52 and the correlator 53 can be structured by hardware.

Herein, the above-mentioned operation will be described by the use of formulae. In this event, let M be representative of a pilot length. In addition, it is assumed that $i_{PL}$ (m) is representative of an m-th one of the reception signal, namely, an m-th symbol of the pilot signal while $Z_{iPL}(m)$ is representative of an m-th one of the fading vectors obtained by channel estimation, where m is an integer between 0 and M-1.

Under the circumstances, the coherent detection signal is represented by $v_{iPL}(m)$ and is given by:

$$v_{iPL}(m) = i_{PL}(m) \times conj\ (Z_{iPL}\ (m)).\qquad(2)$$

From Equation (2), it is readily understood that the fading vectors can be cancelled from the coherent detection signal $v_{iPL}(m)$. This shows that the synchronization tracking operation can be executed without any DLL.

According to this invention, synchronization acquisition and synchronization tracking operations can be accurately executed even when an abrupt variation which can not be traced by the DLL takes place in the delay times of the multi-path components. This is because each finger receiver unit has a plurality of the despreaders and either one of the despreaders can respond to each multi-path component at timing matched with an instantaneous delay time and an optimum output is selected by the selector from the outputs of the despreaders. As a result, each finger receiver unit can effectively receive and respond to each multi-path component. Thus, the rake synthesizer 18 can receive the desired wave. With this structure, any DLL which has a loop and which is complex in structure becomes unnecessary in each finger receiver unit. This results in decreasing an amount of calculations and reducing a size of the rake receiver circuit. Moreover, when the despreaders and the correlator are structured by hardware, processing which depends on the chip rate can be accomplished at a high speed in the despreaders and the correlator.

Furthermore, the detection of the delay times of each multi-path component is performed by the use of the DSP and CPU operable in accordance with software in this invention. This means that an algorithm for the detection can be flexibly changed and optimized.

While this invention has thus far been described in conjunction with a preferred embodiment thereof, it will readily be possible for those skilled in the art to put this invention into practice in various other manners. For example, the number of the finger receiver units may not be restricted to eight but three or so, as illustrated in Fig. 1. In addition, the DSP 41 may be replaced by a general purpose CPU (Central Processing Unit). Furthermore, it is also possible to detect delay times of the multi-path components by processing signals at a high speed by the use of software, instead of using the DSP 41. The finger receiver unit according to this invention may be used in a base station, although the description has been made on the assumption that the finger receiver unit is used in the mobile station.

## Claims

1. A finger receiver unit for use in a code division multiplex access (CDMA) system to produce a despread signal in response to a spread code and a reception signal which is subjected to CDMA modulation, comprising:

   a plurality of despreader circuits each of which has a delay time different from each other and which are given the reception signal and the spread code in common to produce a plurality of delayed despread signals in dependency upon the delay times of the despreader circuits; and
   a selector circuit which selects, as the despread signal, one of the delayed despread signals that has the best quality among the delayed despread signals.

2. A finger receiver unit as claimed in claim 1, wherein each of the despreader circuits comprises:

   a delay circuit which has the delay time different from each other and which is operable in response to the spread code to produce each delayed spread code different in delay time from each other; and
   a calculation circuit which is operable in response to the delayed spread code and the reception signal to produce each delayed despread signal.

3. A finger receiver unit as claimed in claim 1 or 2, the spread code being divided into a plurality of chips each of which has a predetermined chip time, wherein each of the delay times assigned to the delay circuits of the despread circuit is given by dividing the predetermined chip time by a positive integer greater than unity.

4. A finger receiver unit as claimed in claim 2 or 3, wherein the calculation circuit comprises:

   a complex multiplier which multiplies the delayed spread code by the reception code in the form of complex number to produce a sequence of product signals;
   a correlation circuit which calculates correlation among the product signal sequence; and
   an output circuit which calculates the delayed despread signal from the correlation.

5. A finger receiver unit as claimed in claim 4, wherein the output circuit comprises:

   a path estimating circuit for estimating a communication path from the correlation to produce a fading vector which is related to the communication path;
   a complex conjugate calculator for calculating a complex conjugate of the fading vector; and
   a multiplier for multiplying the correlation by the complex conjugate to produce the delayed despread signal.

6. A rake receiver circuit for use in a code division multiplex access (CDMA) system to produce a demodulated signal in response to a spread code and a reception signal which is subjected to CDMA modulation and which is given to the rake receiver circuit through a plurality of paths, comprising:

   a search finger circuit which receives the reception signal to detect a delay profile of the reception signal having a plurality of path components dependent on the paths;
   a delay time detection circuit which detects each component delay time of the plurality of the path components by detecting each peak timing of the delay profile;
   a spread code generator which generates a predetermined spread code;
   a plurality of delay circuit elements which have primary delay times different from each other and which delay the predetermined spread code by the primary delay times to produce a plurality of delayed spread codes;

a plurality of finger receiver units which are given the delayed spread codes and the reception signal to demodulate the path components in accordance with the delayed spread codes into demodulated path components, respectively; and

a rake synthesizer which is supplied with the demodulated path components to synthesize the demodulated path components into the demodulated signal;

each of the finger receiver units comprising;

a plurality of despreader circuits each of which has an internal delay time different from each other and which are given the reception signal and the spread code in common to produce a plurality of delayed despread signals in dependency upon the delay times of the despreader circuits; and

a selector circuit which selects, as each of the demodulated path components, one of the delayed despread signals that has the best quality among the delayed despread signals.

7. A rake receiver circuit as claimed in claim 6, wherein each of the despreader circuits comprises:

an internal delay circuit which has the internal delay time different from each other and which is operable in response to the spread code delayed by the primary delay time to produce each delayed spread code different in internal delay time from each other; and

a calculation circuit which is operable in response to the delayed spread code and the reception signal to produce each delayed despread signal.

8. A rake receiver circuit as claimed in claim 6 or 7, the spread code being divided into a plurality of chips each of which has a predetermined chip time, wherein each of the internal delay times assigned to the internal delay circuits of the despread circuits is given by dividing the predetermined chip time by a positive integer greater than unity.

9. A rake receiver circuit as claimed in claim 7 or 8, wherein the calculation circuit comprises:

a complex multiplier which multiplies the delayed spread code by the reception code in the form of complex number to produce a sequence of product signals;

a correlation circuit which calculates correlation among the product signal sequence; and

an output circuit which calculates the delayed despread signal from the correlation.

10. A rake receiver circuit as claimed in claim 9, wherein the output circuit comprises:

a path estimating circuit for estimating a communication path from the correlation to produce a fading vector which is related to the communication path;

a complex conjugate calculator for calculating a complex conjugate of the fading vector; and

a multiplier for multiplying the correlation by the complex conjugate to produce the delayed despread signal.

11. A rake receiver circuit as claimed in any of claims 8 to 10, wherein the reception signal is given at a preselected symbol rate longer than the predetermined chip rate.

12. A rake receiver circuit as claimed in wherein each of the internal delay times is shorter than the primary delay time.

13. A rake receiver circuit as claimed in claim 12, wherein the internal delay circuits of each finger receiver unit have the internal delay times which are varied from each other within the chip rate.

14. A rake receiver circuit as claimed in any of claims 9 to 13, wherein the complex multiplier and the correlation circuit are structured by hardware.

15. A rake receiver circuit as claimed in any of claims 6 to 14, wherein the delay time detection circuit is structured by a digital signal processor (DSP).

16. A rake receiver circuit as claimed in any of claims 6 to 14, wherein the delay time detection circuit is structured by a central processing unit (CPU).

# FIG. 1
## PRIOR ART

EP 0 966 110 A2

# FIG. 2

ELECTRIC POWER

MP1

MP2

MP3

DELAY TIME

DELAY PROFILE

# FIG. 3

EP 0 966 110 A2

# FIG. 4

Block diagram showing: DELAYED SPREAD CODE → INTERNAL DELAY UNIT (51) → COMPLEX MULTIPLIER (52) ← RS; COMPLEX MULTIPLIER → CORRELATOR (53) → PATH ESTIMATOR (54) → COMPLEX CONJUGATE CALCULATOR (55) → (56).